# EUROPEAN PATENT SPECIFICATION

(11) **EP 2 640 011 B1**
(45) Date of publication and mention of the grant of the patent: **12.11.2014**
(21) Application number: 12305305.0
(22) Date of filing: 15.03.2012
(51) Int. Cl.: H04L 12/417, H04L 12/40, H04L 12/24, H04L 12/805, H04L 12/841

(54) **A method for transporting real time packets**
Verfahren zum Transport von Echtzeit-Paketen
Procédé pour le transport de paquets en temps réel

(43) Date of publication of application: 18.09.2013
(73) Proprietor: ALCATEL LUCENT, 92100 Boulogne-Billancourt (FR)
(72) Inventor: Bui, Dinh Thai, 91620 NOZAY (FR); Le Pallec, Michel, 91620 NOZAY (FR)
(74) Representative: Sciaux, Edmond

(56) References cited:
- EP-A1- 1 786 149
- EP-A1- 1 885 092
- US-B1- 7 046 685

## Description

The technical domain is the domain of communication networks, and particularly communication networks able to transport packets with stringent real-time constraints/requirements.

More particularly, the present application concerns a method to simultaneously reduce end-to-end latency, jitter and loss ratio of a real-time application traffic flow.

These three parameters are generally linked. Methods are known to optimize/reduce at least one of them, but an optimization/reduction of one parameter, most of the time leads to a degradation of another parameter.

A known method to reduce loss ratio is to over-provision the buffer size within network nodes. This avoids buffer over-flow, which is the main cause of loss. However, the buffer size increase leads to an increase of the end-to-end latency.

A known method to optimize latency is to implement several qualities of service, QoS, with higher priorities assigned to the more demanding real-time applications. However, this method does not improve the jitter.

A known method to optimize jitter is to implement delay equalization at each network node. The principle of such delay equalization consists in using delay lines to delay quicker packets of a delay up to the effective delay of the latest packet, in order to synchronize the quicker packets with respect to the latest packet. The introduction of delay lines increases latency. Moreover, this does not prevent packet losses.

Some statistical methods are also known. Their major drawback is they do not allow for being deterministic concerning the three critical parameters. This may occasionally leads to a very small number of traffics experiencing a very large delay, that is, latency. Such prejudicial non deterministic behavior prevents from deploying some critical applications.

Some communication applications have more and more stringent real-time requirements. Here are some examples:
- conversational voice needs an end-to-end latency of less than 100 ms and a loss ratio of less than 10⁻²;
- conversational video needs an end-to-end latency of less than 150 ms and a loss ratio of less than 10⁻³;
- telesurgery needs an end-to-end latency of less than 5 ms and a jitter of less than 1 ms.

Said last application, telesurgery, is not currently feasible using prior art approaches.

A time division multiplexing technology, TDM, is known to provide a way to reduce latency and jitter, by dedicating a time slot to each traffic flow. However TDM can only accommodate a fix frame size. It is thus not applicable to most of nowadays applications, using variable size packets, such as e.g. TCP/IP protocols. Variable size packets can be converted to fix size packets but this needs additional processing and extra overhead leading to a waste of network resources.

Document EP1786149 discloses transmission of status-information of a respective assigned packet queues to a central communicate unit and evaluating it centrally. A control message is sent to the peripheral communication unit, wherein the control message contains information for controlling the processing of the packet queues assigned to the logical connection.

A method able to simultaneously reduce the three parameters, that is, end-to-end latency, jitter and loss ratio of a real-time traffic flow, applicable to variable packet sizes and also guaranteeing a deterministic behaviour is thus currently hardly expected.

The object of the present application is a method, in a time-synchronized packet-switched communication network, for transporting packets from at least one source node to at least one destination node through at least one transit node, according to claim 1.

According to another feature, a set of transmission instants is defined by a starting transmission instant and a period.

According to another feature, output port schedulers of a same node collaborate during the building of a transmission schedule table for a common upstream link.

According to another feature, each output port scheduler proposes a transmission schedule table to each of its adjacent downstream output port(s) scheduler.

According to another feature, the building step, when building a transmission schedule table for an output port scheduler, takes into account all packets competing for an output port associated to said output port scheduler, in order to avoid temporal conflict.

According to another feature, the building step, when building a transmission schedule table for an output port scheduler, takes into account any transmission delay occurring from said output port scheduler to its adjacent downstream output port scheduler.

According to another feature, the building step, when building a transmission schedule table for an output port scheduler, takes into account an overall delivering delay until source output port scheduler.

According to another feature, the method further implements delay equalization at each node.

Others features, details and advantages will become more apparent from the detailed illustrating description given hereafter with respect to the drawings on which:
- figure 1 is an illustrative network,
- figure 2 shows temporal diagrams,
- figure 3 illustrates a signalling embodiment.

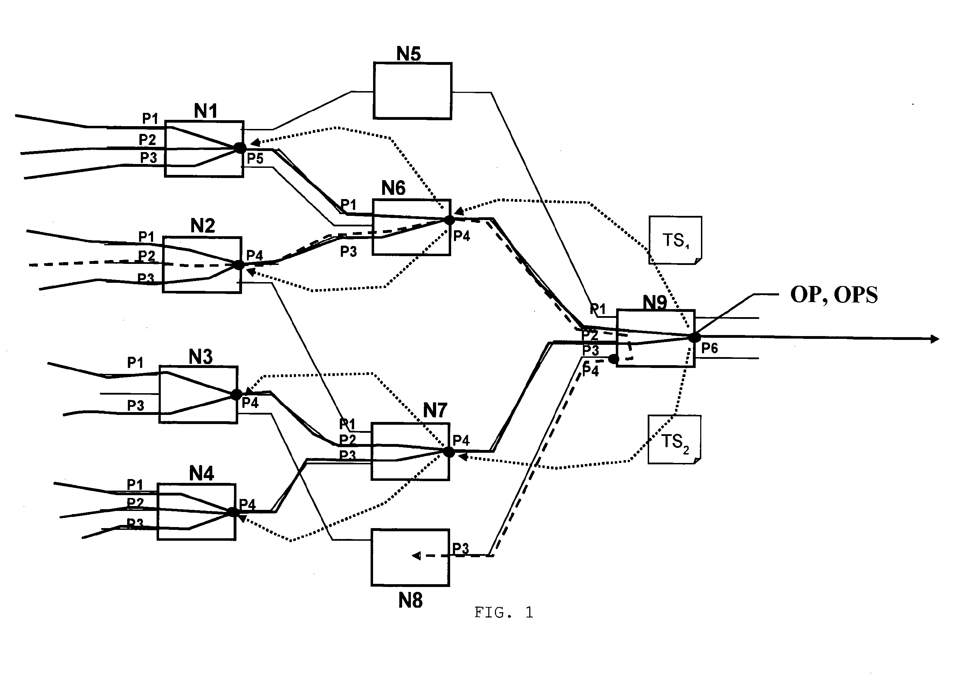

According to figure 1, is figured an illustrative communication network, where the method may be implemented. Said communication network comprises a number of nodes Ni, here e.g. 9 nodes N1-N9. Said nodes N1-N9 may be parted into edge nodes N1-N4, N9 and inner or transit nodes N5-N8. Any given pair of nodes may be linked together by at least one link. Each node N1-N9 comprises at least one port Pj to interface some links, either as input port and/or as output port, depending on the direction of the traffic flow.

A port Pj, be it an input port or an output port may be referred to by the node Ni to which it belongs and its proper port reference Pj. E.g. the rightest port on the figure 1 may be referred to by N9-P6.

Consequently, a link may be referred to by its two extremity ports Pj. E.g. nodes N7 and N9 are linked by a single link N7-P4 / N9-P3.

A traffic flow is transported through said communication network from one edge node, called a source node, to another edge node, called a destination node, through some inner nodes. Depending on network policies, said traffic flow is forwarded through nodes, by selecting, at each node Ni, a right output port Pj from said node Ni.

As an example, a traffic flow enters the communication network through source (edge) node N1 by its (here input) port P1, thus N1-P1. It is then switched through said node N1 to its (here output) port P5, namely N1-P5. Through the associated link N1-P5 /N6-P1 said traffic flow is transported to (inner) node N6, which it enters through the (here input) port P1, namely N6-P1. The traffic flow is then switched through said node N6 to its (here output) port P4, namely N6-P4. Through the associated link N6-P4/N9-P2 the traffic flow is transported to the destination (edge) node N9, which it enters through the (here input) port P2, namely N9-P2. Said traffic flow exits the communication network through said destination (edge) node N9 by the (here output) port P6, namely N9-P6.

Since very stringent real-time characteristics are expected, the communication network where the method is to be implemented is advantageously a time-synchronized communication network. In such a time-synchronised communication network, all nodes N1-N9 of the communication network share a common time reference. Such a feature is nowadays an emerging feature defined e.g. by standards such as ITU-T G.8271.1, G.8272, G.8273, G.8275.1. Such synchronisation may e.g. imply a shared absolute time reference between all nodes N1-N9 within an accuracy of less than 1 µs. Such a feature allows for a precise synchronisation between nodes, and thus for the scheduling of traffic flows to be switched across them.

According to the method, said communication network is used to transport traffic flows. A traffic flow is an application related set of information. A traffic flow is a set of packets having in common some defined characteristics. It comprises packets, possibly of different packet sizes, sharing e.g. a common source, that is, an edge node from where said packets enter the communication network, and/or e.g. a common destination, that is, an edge node from where said packets exit the communication network, and/or a common type of service, TOS. A traffic flow may e.g. be a forwarding equivalence class, FEC, as specified within the MPLS framework. Since packets of a traffic flow are application related, they must also be transported in a given, relatively short, time interval.

Moreover a traffic flow is unidirectional from a source node toward a destination node. With regards to this later aspect, any given pair of traversed adjacent nodes is composed of an upstream node, the one closer to the traffic flow source node, and a downstream node, the one closer to the traffic flow destination node.

In the real-time domain, a typical traffic flow may e.g. be a video stream.

The main idea developed here is to provide a communication network with the advantages of a TDM protocol in term of reduction of latency, jitter and loss ratio, while being able to cope with packets of variable sizes.

To do so, the method timely configures the communication network, for each output link related to an output port. This may advantageously be done on a traffic flow basis, along the whole path of a traffic flow, from the source node to the destination node, before the actual transport of said traffic flow across the network. By doing so, no temporal conflict will occur when the traffic flow is effectively sent across the communication network, and the transmission characteristics of the traffic flow are optimized.

A given traffic flow comprises a temporal sequence of successive packets. Said traffic flow may be characterized by the sizes Si of said packets. For each such packet size, the traffic flow comprises an amount of packets of said size. Since all packets of the traffic flow must be transmitted according to given time characteristics, said amount may be translated in a time load Ti, expressed e.g. as a throughput or a bandwidth or a frequency. A traffic flow may thus be characterized by a set of pairs associating a packet size and its time load: FC = {(S1,T1); ..; (Si, Ti); ..; (Sn,Tn)}.

Given said traffic flow characteristic FC, it is possible to determine for each link between two nodes N1-N9 a time schedule.

According to the method, taking into account all the traffic flows intended to be transmitted over a given output link it is possible to build a time schedule for said output link. Said time schedule shares the link bandwidth among the concurrent traffic flows using said link. Said time schedule may be built in the form of transmission schedule table TS comprising a set of n-uplets, each comprising a given size Si of packet and a set of transmission instants SIi. A transmission schedule table TS is defined for an output link and comprises for each needed size Si of packet, the set of transmission instants SIi in time where a packet of said size of packet Si may be sent over said output link. A transmission schedule table TS may then be expressed as a set of pairs (Si, SIi), each associating a size Si and a set of transmission instants SIi, so TS = {(S1, SI1); ..; (Si, SIi); ..; (Sn, SIn)}.

Once built, each transmission schedule table TS is delivered to an output port scheduler OPS, enabling the later to manage the transmission of all combined traffic flows without temporal conflicts over its associated output link. Since a link is generally not capable of any treatment, the scheduling treatment must done by any one of the two extremity ports of said link, advantageously the output port OP, which is upstream of said link, with respect to the direction of the traffic flow. Said output port OP then manages the scheduling over the link attached to said output port OP. A dedicated module, named an output port scheduler OPS, in charge of the scheduling may be provided to each output port OP. An output port scheduler OPS could be a software, a hardware piece or a combination of both. An output port scheduler OPS is provided to each output port on each network node.

Said output port scheduler OPS then receives the transmission schedule table TS built for its attached output link. Said output port scheduler OPS may then transmit packets over said output link, according to said transmission schedule table TS. That is, the output port scheduler OPS transmits a packet, according to its packet size Si, at a transmission instant from a set SIi associated to said packet size Si in said transmission schedule table TS.

By doing so, each packet to be transmitted, find its temporal place and no conflict occurs since all the packet transmissions are temporally preconfigured before any sending. The usage of link bandwidth may be optimized. Conflicts that may result from packets competing for accessing a given link, in a prior art packet switched communication network, are here avoided by configuring in advance bandwidth allocations, according to a time schedule/transmission schedule table TS, for each link.

For a given packet size Si, a transmission schedule table TS associates a set of transmission instants SIi to a packet size Si. Said set of transmission instants SIi may be expressed, in a more general form, as a list of transmission instants SIi = {t0, t1, .., ti, .., tn}. Said transmission instants may be ordered or not. In order to be usable for an output port scheduler OPS, at least some of said transmission instants ti are preferably defined in the future with respect to the current computing instant. If a transmission instant ti is defined in the past, with respect to the current time, it may simply be ignored. However such a past transmission instant ti is useless and should be avoided.

Such a way of expressing a set of transmission instants SIi may become cumbersome when a transmission instant ti must be defined individually for each packet of said packet size Si. An alternate convenient way to express said set of transmission instants SIi may be by indicating a first initial transmission instant t0 and a frequency f or a period T, when a transmission of a packet of packet size Si occurs periodically. This is equivalent to provide the following list of transmission instants: {t0, t0+T, .., t0+i.T, ..} but advantageously takes far less memory space.

It appears to the one skilled in the art reading the previous description that to build a transmission schedule table TS for a given output link, it is necessary to know all traffic flows that travel through said output link, that is, all traffic flows sharing said output link, in order to compile all the needs of said travelling traffic flows into a convenient transmission schedule table TS without any conflict.

Accordingly, the building step, when building a transmission schedule table TS for one output port scheduler OPS, advantageously takes into account all packets competing for an output link associated to said output port scheduler OPS, that is, to the output link located downstream of the output port OP of said output port scheduler OPS, in order to avoid temporal conflict, between packets.

The building step generally needs a view of traffic flows at a more global level than only at the output port or only at an output link level.

A first way to get a more global level view may be a centralized way. In such a centralized way a central managing module is in charge and run the building step for determining all the transmission schedule tables TS for all the output links of the communication network. Such a way of doing is possible and is advantageously located at a level sufficient to get all the needed information about traffic flow characteristics. However, such an approach might encounter scalability issue with communication network growing in size/number of nodes.

Another way of doing said building step, that may be called semi-centralized, is to have a managing module responsible for each part of the communication network. The different managing modules, each responsible of a part, must then collaborate to compute the different TSs.

A totally distributed approach is however preferred. Rather ingeniously the inventors have noticed that an output port scheduler OPS due to its location at an output port OP is capable of knowing all the traffic flows that will travel through its attached downstream output link.

Let us consider the example of figure 1. The traffic exiting from output port P6 of node N9 over the output link outputting from output port N9-P6 results from the addition of all the upstream traffics heading to said output port N9-P6. A first upstream traffic consists of a part of the traffic coming from node N6, through link N6-P4/N9-P2. It is only a part, since said link N6-P4/N9-P2 also carries some traffic heading to output port N9-P4. A second upstream traffic consists of a part of the traffic coming from node N7, through link N7-P4/N9-P3. In the example, no other upstream traffic is heading to output port N9-P6.

Accordingly, an output port scheduler OPS located at said output port N9-P6 is well positioned to build a time schedule for each of its upstream links N6-P4/N9-P2 and N7-P4/N9-P3 so that when all traffics heading to port N9-P6 are summed up to be transmitted over the output link outputting from output port N9-P6, the aggregation of all the upstream traffics/time schedules can be performed without conflict.

An output port scheduler OPS has two roles. The first one consists in building TSs for its different adjacent upstream output port schedulers OPSs. The second one consists in applying the different TSs it has received from its downstream OPSs when transmitting/scheduling packets over its associated output link.

Accordingly an output port scheduler OPS is well positioned to build a transmission schedule table TS for each of its adjacent/neighbour upstream links, each output link being managed by its adjacent upstream output port scheduler OPS. Going on with the previous example, the output port scheduler OPS of output port N9-P6 is advantageously in charge of building a transmission schedule table TS for its first adjacent upstream output port scheduler OPS in charge of output port N6-P4 and a transmission schedule table for its second adjacent upstream output port scheduler OPS in charge of output port N7-P4.

These two transmission schedule tables TS are built so as to be directly compatible, that is not temporally overlapping each other, in order the corresponding traffics may be aggregated easily without any conflict. By doing so, the merging of the two corresponding traffics onto the output link, exiting N9-P6, can be performed without any additional delay. Any packet, arriving from any of the two links N6-P4/N9-P2 and N7-P4/N9-P3 may thus be transmitted immediately when arriving at output port N9-P6, so minimizing both its latency and its jitter.

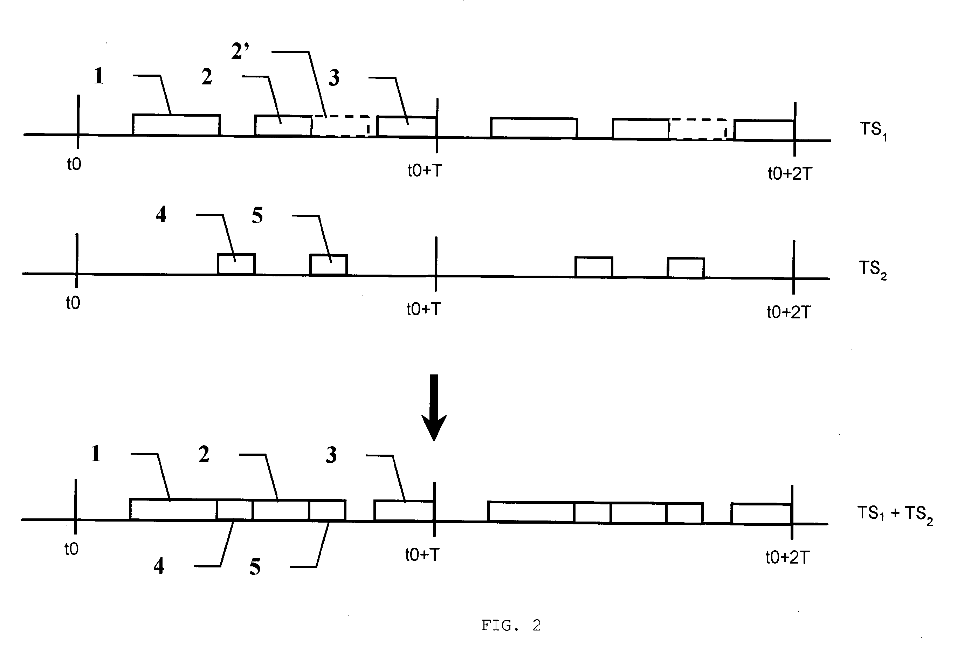

Figure 2 illustrates, on temporal diagrams, some illustrative time schedules/transmission schedule tables TS and the notion of compatibility. The first top diagram illustrates, based on a periodic embodiment, a first time schedule derived from a first transmission schedule table TS1. It shows on each period T, three packets 1, 2, 3, temporally defined with respect to a periodic starting time t0, t0+T, t0+iT, etc. These packets 1-3 are not necessary of the same size, as illustrated. The second middle diagram illustrates, with the same temporal reference, a second time chart derived from a second transmission schedule table TS2. It show on each period T, two packets 4, 5, temporally defined with respect to the same starting period time t0, t0+T, t0+iT, etc. The time illustrated here is the packet arrival time at a given output port, e.g. N9-P6.

Since none of the packets 1-5 of either of the two transmission schedule table TS1, TS2 temporally overlaps with another, said two transmission schedule tables are referred to as compatible. It is thus possible to merge them into a single aggregated transmission schedule table TS1+TS2 illustrated on the third bottom diagram.

It is important to note here that in the case where at least one packet 1-5 initially would have been overlapping with another, it is still possible to rearrange a transmission schedule table TS by temporally moving said overlapping packet so that the transmission schedule tables TS becomes compatible.

A rearrangement may comprise temporally moving any packet inside a given period. According to another embodiment, a rearrangement may comprise fragmenting a packet into several parts inside a given period.

Any rearrangement is possible while keeping the given bandwidth usage constant. Since during a rearrangement a packet is only fragmented in parts or temporally moved, but always inside the period, the bandwidth usage remains the same.

If packet 2 was initially defined as 2' instead, then packet 2' would obviously overlap with packet 5. Transmission schedule tables TS1, TS2, would not have been compatible and no merge would have been possible. However here a rearrangement, consisting in moving packet 2' to the temporal location of packet 2 modifies the first transmission schedule table TS1, so that it becomes compatible with the second transmission schedule table TS2. No bandwidth use amendment is induced by such a rearrangement.

Although all traffics carried by a given link are heading to the same node Ni, as previously stated, they may however not be heading to the same output port OP of said node. Consequently an output port scheduler OPS may receive several transmission tables TS built by different downstream output port scheduler OPS.

When considering e.g. link N6-P4/N9-P2, said link is shared between a first traffic flow, figured in plain line in figure 1, heading to output port N9-P6 and a second traffic flow, figured in dashed line, heading to output port N9-P4. By applying the previously described scheme, the output port scheduler OPS in N9-P6 builds a transmission schedule table TS for the traffic flow arriving at its output port N9-P6 and delivers said transmission schedule table TS to its adjacent upstream output port scheduler OPS in N6-P4. Similarly, the output port scheduler OPS in N9-P4 builds another transmission schedule table TS for the traffic flow arriving at its output port N9-P4 and delivers said transmission schedule table TS to its adjacent upstream output port scheduler OPS that appears to be the same output port scheduled located in N6-P4.

Such a situation implies that said several transmission schedule tables TS corresponding to a same output link and thus delivered to a same output port scheduler OPS must be compatible. Said compatibility, as illustrated in figure 2, mean that said several transmission schedule tables TS must not be temporally overlapping each other, so that the corresponding traffic flows can be forwarded to the same output port OP and be transported over the same output link they share without any conflict.

This constraint implies that the several transmission schedule table TS builders, meaning several output port schedulers OPS, that receive traffics from a common upstream link, must cooperate when building said transmission schedule tables TS. This is, however, rather a local computation, since all said several output port schedulers OPS pertain to a same node.

Said cooperation between OPSs to build a transmission schedule table TS is named consolidation. If necessary, a rearrangement, as defined previously, can be applied to any of the consolidated transmission schedule tables, to obtain compatible transmission schedule tables.

Referring back to the example, the output port scheduler OPS in output port N9-P6 and the output port scheduler OPS in output port N9-P4 must cooperate when each of them builds a transmission schedule table TS for their common adjacent upstream output port scheduler OPS in charge of the output port N6-P4. By doing so, both transmission schedule tables TS so built, and received by the adjacent upstream output port scheduler OPS in N6-P4 are assured to be compatible, meaning not to be temporarily overlapping each other.

By using compatible transmission schedule tables TS for a common upstream output port, it is possible and easy to merge several transmission schedule tables TS into a single transmission schedule TS. Said consolidation may be made by concatenating the content of said several transmission schedule tables. So a first transmission schedule table TS1 = {(S1, SI1); ..; (Si, SIi); ..; (Sn, SIn)} and a second transmission schedule table TS2 = {(S'1, SI'1); ..; (S' i, SI'i); ..; (S' n, SI' n) } compiles by concatenating: TS1+TS2= {(S1, SI1); ..; (Si, SIi); ..; (Sn, SIn); (S'1, SI'1); ..; (S'i, SI'i); ..; (S'n, SI'n)}.

Starting from each edge node, considered as a destination node with regards to given traffic flows, each output port scheduler OPS may thus build a transmission schedule table TS for each of its adjacent upstream link(s) and delivers said transmission schedule table(s) TS to said each adjacent upstream output port scheduler(s) OPS.

Each of said adjacent upstream output port(s) scheduler OPS receives possibly several transmission schedule tables TS coming from its downstream output port scheduler(s) and in case consolidates them.

In turn, said adjacent upstream output port scheduler OPS then builds a transmission schedule table TS for each of its related adjacent upstream link(s) and delivers the later to its related adjacent upstream output port scheduler OPS.

Said process is recursively applied upstream until reaching an edge node, that is here considered to be a source node for the given traffic flows. By doing so, the whole network may be configured by building and delivering transmission scheduling tables TS to all output port schedulers OPS. A transmission schedule table TS is then built by a downstream output port scheduler OPS and then delivered to its adjacent upstream output port scheduler OPS. The whole configuration is processed going upstream with respect to the direction of the intended traffic flow from edge destination node toward edge source node.

As soon as an edge source node is so reached, it means that at least one path from said edge source node to an edge destination node is fully configured, and that each output port scheduler OPS along said path is configured by a delivered transmission schedule table TS dedicated to its output link. Each output port scheduler OPS is thus ready and able to transmit/schedule packets over its output link according to said transmission schedule table TS. The path is then ready to transport traffic, and the transmission of packets may start from said source node along said path toward said destination node.

The building step is done by each output port scheduler OPS recursively upstream, hop by hop, along a path in a distributed way, thanks to the information available at each output ports scheduler OPS eventually combined with the information from other local OPSs, i.e. OPSs located on the same network node.

All these features lead to no conflict at each output port where packets, even arriving from different nodes, are multiplexed over a same output link. The so pre-scheduled packets can get through a network node Ni with a minimum and quasi-constant transit time. This leads to an optimization of both end-to-end latency and end-to-end jitter. Since causes leading to packet loss depend on jitter accumulation profile and on the use of buffers, packet loss is also avoided.

It may be noted here, that buffers, as used in prior art communication networks and scheduling methods, mainly to cope with lack of synchronization, are no longer needed here, since all packets transmission are accurately synchronized between synchronized nodes and path are established for traffics across the whole communication network. The accuracy of the synchronization of packet transmissions can be considered to be of the same accuracy as the accuracy of the synchronization of the nodes, i.e. of 1 µs, if the nodes of the network are time synchronized with an accuracy of 1 µs.

Eventually some buffers could be used to absorb synchronization error. They can however be reduced to a very small size/length.

According to a default embodiment, one can consider that all links, or at least any two links heading to a same output port, exhibits equal or similar link transmission delays. Similarly, node transmission delays through any pair of nodes may be considered equal. In this case, since both node and link transmission delays are comparable, they can be ignored.

If, depending on the communication network technology or topology, the previous hypothesis cannot be made, and different links, respectively nodes may exhibit different link, respectively node, transmission delays, it becomes necessary to take said difference into account.

The knowledge of each link, respectively node, transmission delay can be obtained from any known method. It can be either determined when assembling the communication network or monitored on line. However, said obtaining can be considered to be out of the scope of the present application.

According to a preferred embodiment, the building step of a transmission schedule table TS for one output port scheduler OPS, takes into account any transmission delay occurring from said output port scheduler OPS to its adjacent downstream output port scheduler OPS. The said transmission delay comprises the link transmission delay over the related output link and the downstream node transmission delay. This is done mainly when determining the set of transmission instants SIi so that the transmission instants they contain are both feasible and coherent with other temporal constraints.

As an illustration of said feature, coming back to the example of figure 1, let us consider the building, by output port scheduler OPS in N9-P6, of a first transmission schedule table TS1 for the output port scheduler in N6-P4 together with the building of a second transmission schedule table TS2 for the output port scheduler in N7-P4. Let us consider e.g. that the first link N6-P4/N9-P2 has a first transmission delay τ1, different from a second transmission delay τ2 of the second link N7-P4/N9-P3. Both first and second transmission schedule tables TS1, TS2 must be built to be compatible, that is, not temporally overlapping, with regard to the arrival time as measured at output port N9-P6. The two transmission schedule tables TS1, TS2, must be compatible at arrival, that is, after transiting through their respective links and through node N9, when their respective traffic flows are merged at output port N9-P6. However each transmission schedule table TS comprises transmission instants where packets are to be sent, at the beginning of each link. Consequently the building step must take the different first and second transmission delays τ1, τ2, into account. This may be done e.g. by shifting of a duration τ1 all the transmission instants of the first transmission schedule table TS1 and of a duration τ2 all the transmission instants of the second transmission schedule table TS2.TS1 and TS2, so built, are compatible with regards to the arrival times of packets at the output port N9-P6. Thus, after scheduled packets have crossed the respective links and node and undergo the corresponding respective transmission delays τ1, τ2, they encounter no conflict at output port scheduler OPS in charge of output port N9-P6.

According to another embodiment, the building step of a transmission schedule table TS for one output port scheduler OPS, takes into account any delivering delay to a source output port scheduler OPS. Since a transmission schedule table TS is first built and then delivered, and these two steps are recursively repeated upstream from one node until one edge source node is reached, it may takes some time to finally reach said edge source node and have its output port scheduler OPS configured by having its transmission schedule table TS delivered.

Since a transmission of a traffic flow may only start after said edge source node output port scheduler OPS has been delivered its transmission schedule table TS, it is advantageous to take the so induced delay into account when building any transmission schedule table TS. This is done mainly by not including in any transmission schedule table TS any transmission instant occurring before the time when said edge source node output port scheduler OPS received its transmission schedule table TS and starts any traffic transmission.

In case of, it is not a problem. Any transmission instant found in any transmission schedule table TS that is passed, may be simply ignored by the corresponding output port scheduler OPS.

According to an embodiment, the described method may be applied to manage, in term of bandwidth, the whole capacity of the communication network.

Alternately, it can be applied to only a given percentage of the communication network capacity. By doing so, X% of the bandwidth of the communication network may be dedicated to the current method, to transport critical real time traffic flows, while the remaining 100-X% is dedicated to another method, e.g. a best effort method. This can be obtain by dedicating X% of the timeslot of any link to be shared between the several transmission schedule tables TS associated with said link, while the remaining 100-X% of said timeslot is used in another way.

It has been seen that the described method allows for a drastic reduction of the latency and jitter. However the overall global performance can be further improved by also applying, at each node level, a delay equalization method, in order, for instance, to improve the scalability of the solution, e.g. transit times from the full mesh between all ports of a node are equal. The delay equalization method can also allow for a further and better control of the jitter. Such a decreased jitter further helps the described method, in that the reduction/absence of jitter guarantees a good compatibility of the competing transmission schedule tables TS. Such an added delay equalization method thus advantageously interacts with the described method so that both methods benefit from said interaction.

The principles previously described may be applied in any packet switched communication network, be it connection oriented or connectionless. Similarly they can be applied to any network protocol.

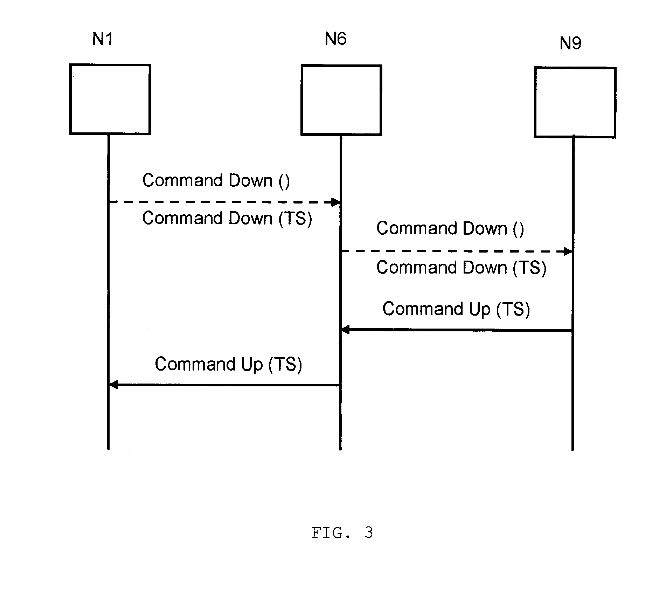

Figure 3 illustrates the command exchanges that may occur to implement the described method. Some examples are here defined according to several syntax protocols. Said exchanges may be made over a control plane, using a signalling protocol, or over a data plane, e.g. by using an Operation Administration and Maintenance, OAM, protocol.

A first mandatory exchange concerns the delivery of transmission schedule tables TS to each output port scheduler OPS. Figure 3 refers to the illustrative communication network of figure 1, and particularly to the traffic crossing the communication network, which it enters from the source edge node N1, travels through the transit node N6, and then exits through the edge destination node N9.

When considering the embodiment where (the building and) the delivery of transmission schedule tables TS is made in a distributed way, said delivery starts from the destination node, here N9. Node N9, by means of its at least one output port scheduler OPS, sends a transmission schedule table TS to its adjacent upstream node, here node N6, to the attention of an output port scheduler OPS in said adjacent upstream node, here node N6. This is made through a message generically named Command Up, transporting the transmission scheduling table TS for node N6. In turn, node N6, by means of its at least one output port scheduler OPS, sends a transmission schedule table TS to its adjacent upstream node, here node N1, to the attention of an output port scheduler OPS in N1. This is made through a message generically named Command Up, transporting the transmission scheduling table TS for node N1.

When using IETF Resource Reservation Protocol, RSVP, or RSVP Traffic Engineering Protocol, RSVP-TE, said Command Up may be a Resv message. The transmission scheduling table TS may be defined and transported by mean of a newly defined TS Object.

When using IETF Border Gateway Protocol, BGP, protocol or Multi-Protocol extension for BGP, MP-BGP, said Command Up may be a Label Mapping message. The transmission scheduling table TS may be defined and transported by mean of a newly defined TS Attribut.

Depending on the used protocol, a transmission schedule table TS may be transported/signalled directly for the link/ output port of which said transmission schedule table TS configure the scheduling. However, when using e.g. a RSVP or RSVP-TE protocol, the signalling is constrained to a Label Switch Path, LSP, and the output port/link is not visible. In this case, a transmission schedule table TS must be built for each LSP. The several transmission schedule table TS for said LSPs are built to be compatible. By doing so, at reception, an output port scheduler OPS receives all the transmission schedule tables TS and merges them as previously described.

Both cases are equivalent, as long as "elementary" transmission schedule tables TS, for each LSP, remain compatible between them.

Up to now, the method has been described with a building step starting from the edge destination node. To build a transmission schedule table TS, a builder, be it a builder in source, transit or destination node, needs information about the characteristics of traffic flows, in order to build transmission schedule tables TS adapted to transmit said traffic flows.

Knowing the temporal characteristics of a traffic flow, the one skilled in the art would be able to build corresponding transmission schedule tables TS to accommodate it with regard to other competing traffic flows. Consequently said part of the whole process is not described in detail. Moreover, said part is out of the scope of the present application.

But the initial question is still asked: How a builder is aware of the characteristics? At least two embodiments are possible to solve this issue.

In a connection oriented communication network, a traffic flow is initially signalled. This means a traffic flow to be transmitted over a communication network enters said communication network, at an edge source node and requests the establishment of a dedicated connection. This is done through a Command Down. At this time the characteristics of the traffic flow are known. Said Command Down is initiated at said edge source node and may be signalled through the communication network to all the nodes, or at least to the nodes along a path and thus to all the output port schedulers OPS along the path of said traffic flow.

Reverting back to the sample of figure 3, the traffic flow enters the communication network at edge source node N1. An optional signalling Command Down may then be emitted from node N1 along the path to and through all transit nodes N6, until the destination node N9. Said Command Down, according to the used protocol may be used to establish a path.

Said Command Down may be sent without any parameters. Alternately it may be used to transmit the characteristics of the traffic flow to all the output port schedulers OPS along the path. Said characteristics may be expressed e.g. in the form of at least one transmission schedule table TS. Said proposed transmission schedule table TS may then be used by a builder to build an effective transmission schedule table TS. The proposed transmission schedule table TS indicates the characteristics of the traffic flow. Then the builder takes into account the constraints it is aware off, e.g. by taking into account several competing traffic flows. It then mainly rearranges the proposed transmission schedule tables TS to make them conforms to the constraints, so as to build the effective transmission schedule tables TS.

When using RSVP or RSVP-TE protocol, said Command Down may be a Path message. The proposed transmission scheduling table TS may be transported by mean of a newly defined TS Object.

When using BGP or MP-BGP protocol, said Command Down may be a Label Request message. The proposed transmission scheduling table TS may be transported by mean of a newly defined TS Attribut.

According to another embodiment, available in both a connection oriented and a connectionless network, a given node, advantageously the edge destination node of a traffic flow is aware of the characteristics of said traffic flow by analysing traffic flows in reverse direction. Said analysis is typically done at a high level end necessitates a knowledge of the application content of the packets. This may e.g. be done through what is known as deep packet inspection, DPI. As a typical illustration, a destination edge node N9, by so inspecting packets transmitted through it, may detect a request to download a video streaming sequence. It may then expect said request to be served, and a traffic flow comprising said video streaming sequence to be sent, through it, but in a direction opposite to the one of the download request. Said node N9 may then anticipate both the characteristics and the timing of said traffic flow and determines corresponding transmission scheduling table(s) TS. Said node N9 can then signalize said characteristics/transmission schedule table TS upstream to the transit nodes N6 until the edge source node N1, as previously described.

Several methods for estimating/anticipating the characteristics of a traffic flow are either known or currently under development. Despites said methods are out of the scope of the present application, they may be combined with the method to provide/anticipate characteristics of any traffic flow to the respective builders of transmission schedule tables TS.

## Claims

1. A method, in a time-synchronized packet-switched communication network, for transporting packets from at least one source node to at least one destination node through at least one transit node, comprising the following steps:
- providing each output port (OP) of said source node, destination node and transit node with an output port scheduler (OPS),
- building for each output port scheduler (OPS), a transmission schedule table (TS) comprising at least one association between a size of packet (Si) and a set of transmission instants (SIi),
- delivering to each output port scheduler (OPS) its transmission schedule table (TS),
- having said output port scheduler (OPS) transmitting a packet of a given size of packet (Si) at a transmission instant from a set of transmission instants (SIi) associated to said given size of packet (Si) according to its transmission schedule table (TS),
wherein each output port scheduler (OPS) starting from said destination node builds a transmission schedule table (TS) for each of its adjacent upstream output port(s) schedulers (OPS) and recursively delivers the transmission schedule table (TS) to each of its adjacent upstream output port(s) scheduler (OPS), until an output port scheduler (OPS) of a source node is reached.

2. The method of claim 1, wherein a set of transmission instants (SIi) is defined by a starting transmission instant (t0) and a period (T).

3. The method of claim 1 or 2, wherein output port schedulers (OPS) of a same node collaborate during the building of a transmission schedule table (TS) for a common upstream link.

4. The method of any one of claims 1 to 3, wherein each output port scheduler (OPS) proposes a transmission schedule table (TS) to each of its adjacent downstream output port(s) scheduler (OPS).

5. The method of any one of claims 1 to 4, wherein the building step, when building a transmission schedule table (TS) for an output port scheduler (OPS), takes into account all packets competing for an output port associated to said output port scheduler (OPS), in order to avoid temporal conflict.

6. The method of any one of claims 1 to 5, wherein the building step, when building a transmission schedule table (TS) for an output port scheduler (OPS), takes into account any transmission delay occurring from said output port scheduler (OPS) to its adjacent downstream output port scheduler (OPS).

7. The method of any one of claims 1 to 6, wherein the building step, when building a transmission schedule table (TS) for an output port scheduler (OPS), takes into account an overall delivering delay until source output port scheduler (OPS).

8. The method of any one of claims 1 to 7, further implementing delay equalization at each node.

## Patentansprüche

1. Verfahren, in einem zeitsynchronisierten paketvermittelten Kommunikationsnetzwerk, zum Transport von Paketen von mindestens einem Quellknoten an mindestens einen Zielknoten über mindestens einen Transitknoten, die folgenden Schritte umfassend:
- Versehen eines jeden Ausgangsports (OP) des besagten Quellknotens, des besagten Zielknotens und des besagten Transitknoten unit einem Ausgangsport-Scheduler (OPSs),
- Erstellen, für jeden Ausgangsport-Scheduler (OPSs), einer Sendezeitplanungstabelle (TS), welche mindestens eine Association zwischen einer Paketgröße (Si) und einem Satz von Sendezeitpunkten (Sli) umfasst,
- Zustellen seiner Sendezeitplanungstabelle (TS) an jeden Ausgangsport-Scheduler (OPSs),
- Bewirkten, dass der besagte Ausgangsport-Scheduler (OPSs) ein Paket einer gegebenen Paketgröße (Si) zu einem Sendezeitpunkt aus einem Satz von Sendezeitpunkten (Sli), welcher unit der besagten Paketgröße (Si) assoziiert ist, gemäß seiner Sendezeitplanungstabelle (TS) überträgt,
wobei jeder Ausgangsport-Scheduler (OPS), ausgehend von dem besagten Zielknoten, eine Sendezeitplanungstabelle (TS) für einen jeden seiner angrenzenden Upstream-Ausgangsport-Scheduler (OPS) erstellt und die Sendezeitplanungstabelle (TS) an einen jeden seiner Upstream-Ausgangsport-Scheduler (OPS) rekursiv ausliefert, bis ein Ausgangsport-Scheduler (OPS) eines Quellknotens erreicht wird.

2. Verfahren nach Anspruch 1, wobei ein Satz von Sendezeitpunkten (Sli) durch einen Zeitpunkt des Beginns der Übertragung (t0) und eine Dauer (T) definiert wird.

3. Verfahren nach Anspruch 1 oder 2, wobei Ausgangsport-Scheduler (OPS) eines selben Knotens während des Erstellens einer Sendezeitplanungstabelle (TS) für eine gemeinsame Upstream-Verbindungsstrecke zusammenwirken.

4. Verfahren nach einem beliebigen der Ansprüche 1 bis 3, wobei jeder Ausgangsport-Scheduler (OPS) einem jeden seiner angrenzenden Downstream-Ausgangsport-Scheduler (OPS) eine Sendezeitplanungstabelle (TS) anbietet.

5. Verfahren nach einem beliebigen der Ansprüche 1 bis 4, wobei der Schrift des Erzeugens während der Erzeugung einer Sendezeitplanungstabelle (TS) für einen Ausgangsport-Scheduler (OPS) alle Pakete, welche für einen mit dem besagten Ausgangsport-Scheduler (OPS) assoziierten Ausgangsport konkurrieren, berücksichtigt, um einen zeitlichen Konflikt zu vermeiden.

6. Verfahren nach einem beliebigen der Ansprüche 1 bis 5, wobei der Schritt des Erzeugens während der Erzeugung einer Sendezeitplanungstabelle (TS) für einen Ausgangsport-Scheduler (OPS) jede zwischen dem besagten Ausgangsport-Scheduler (OPS) und seinem angrenzenden Downstream-Ausgangsport-Scheduler (OPS) auftretende Übertragungsverzögerung berücksichtigt.

7. Verfahren nach einem beliebigen der Ansprüche 1 bis 6, wobei der Schrift des Erzeugens während der Erzeugung einer Sendezeitplanungstabelle (TS) für einen Ausgangsport-Scheduler (OPS) eine Gesamtauslieferungsverzögerung bis zum Quell-Ausgangsportscheduler (OPS) berücksichtig.

8. Verfahren nach einem beliebigen der Ansprüche 1 bis 7, wobei weiterhin an jedem Knoten eine Verzögerungsentzerrung implementiert wird.

## Revendications

1. Procédé, dans un réseau de communication à commutation par paquets synchronisé dans le temps, pour le transport de paquets entre au moins un noeud source et au moins un noeud de destination à travers au moins un noeud de transit, comprenant les étapes suivantes :
- doter chaque port de sortie (OP) dudit noeud source, dudit noeud de destination et dudit noeud de transit d'un programmateur de port de sortie (OPS),
- construire pour chaque programmateur de port de sortie (OPS), une table de programmation d'émission (TS) comprenant au moins une association entre une taille de paquet (Si) et un ensemble d'instants d'émission (Sli),
- délivrer à chaque programmateur de port de sortie (OPS) sa table de programmation d'émission (TS),
- commander audit programmateur de port de sortie (OPS) d'émettre un paquet d'une taille de paquet donnée (Si) à un instant d'émission parmi un ensemble d'instants d'émission (Sli) associés à ladite taille de parquet donnée (Si) conformément à sa table de programmation d'émission (TS),
dans lequel chaque programmateur de port de sortie (OPS) lançant à partir dudit noeud de destination construit une table de programmation d'émission (TS) pour chacun de ses programmateurs de port(s) de sortie (OPS) en amont adjacents et délivre de manière récurrente la table de programmation d'émission (TS) à chacun de ses programmateurs de port(s) de sortie (OPS) en amont adjacents, jusqu'à ce qu'un programmateur de port de sortie (OPS) d'un noeud source soit atteint.

2. Procédé selon la revendication 1, dans lequel un ensemble d'instants d'émission (Sli) est défini par un instant d'émission de départ (t0) et une période (T).

3. Procédé selon la revendication 1 ou 2, dans lequel des programmateurs de port de sortie (OPS) d'un même noeud collaborent durant la construction, d'une table de programmation d'émission (TS) pour une liaison montante commune.

4. Procédé selon l'une quelconque des revendications 1 à 3, dans lequel chaque programmateur de port de sortie (OPS) propose une table de programmation d'émission (TS) à chacun de ses programmateurs de port(s) de sortie (OPS) en aval adjacents.

5. Procédé selon l'une quelconque des revendications 1 à 4, dans lequel l'étape de construction, lors de la construction d'une table de programmation d'émission (TS) pour un programmateur de port de sortie (OPS), tient compte de tous les paquets en compétition pour un port de sortie associé audit programmateur de port de sortie (OPS), afin d'éviter un conflit temporel.

6. Procédé selon l'une quelconque des revendications 1 à 5, dans lequel l'étape de construction, lors de la construction d'une table de programmation d'émission (TS) pour un programmateur de port de sortie (OPS), tient compte de tout retard d'émission se produisant entre ledit programmateur de port de sortie (OPS) et son programmateur de port de sortie (OPS) en aval adjacent.

7. Procédé selon l'une quelconque des revendications 1 à 6, dans lequel l'étape de construction, lors de la construction d'une table de programmation d'émission (TS) pour un programmateur de port de sortie (OPS), tient compte d'un retard de distribution global jusqu'au programmateur de port de sortie (OPS) source.

8. Procédé selon l'une quelconque des revendications 1 à 7, exécutant en outre une égalisation de retard dans chaque noeud.
